(19) Europäisches Patentamt

European Patent Office

Office européen des brevets

(11) Veröffentlichungsnummer: **0 137 295**
**B1**

(12) # EUROPÄISCHE PATENTSCHRIFT

(45) Veröffentlichungstag der Patentschrift:
**28.12.88**

(21) Anmeldenummer: **84110449.0**

(22) Anmeldetag: **03.09.84**

(51) Int. Cl.⁴: **C 08 L  25/12, C 08 L  35/06**

(54) **Thermoplastische Formmasse.**

(30) Priorität: **08.09.83  DE 3332326**

(43) Veröffentlichungstag der Anmeldung:
**17.04.85 Patentblatt 85/16**

(45) Bekanntmachung des Hinweises auf die Patenterteilung:
**28.12.88 Patentblatt 88/52**

(84) Benannte Vertragsstaaten:
**BE DE FR GB NL**

(56) Entgegenhaltungen:
**DE-A- 1 949 487**

(73) Patentinhaber: **BASF Aktiengesellschaft,
Carl-Bosch-Strasse 38, D-6700 Ludwigshafen (DE)**

(72) Erfinder: **Hambrecht, Juergen, Dr., Werderstrasse 30,
D-6900 Heidelberg (DE)**
Erfinder: **Reffert, Rudi Wilhelm, Berliner Strasse 18,
D-6711 Beindersheim (DE)**
Erfinder: **Jung, Rudolf H., Dr., Wachenheimer
Strasse 6 d, D-6520 Worms 1 (DE)**
Erfinder: **Illers, Karl Heinz, Dr., Huttenstrasse 20,
D-6701 Otterstadt (DE)**
Erfinder: **Echte, Adolf, Dr., Leuschnerstrasse 42,
D-6700 Ludwigshafen (DE)**
Erfinder: **Swoboda, Johann, Dr., Neuwiesenstrasse 28,
D-6700 Ludwigshafen (DE)**

## Beschreibung

Die Erfindung betrifft eine schlagfeste und wärmeformbeständige thermoplastische Formmasse, die aus einem S/AN-Copolymerisat A, einem S/MSA-Copolymerisat B und einem Pfropfmischpolymerisat C aufgebaut ist. Das Pfropfmischpolymerisat C enthält ein vinylaromatisches Monomeres und Acrylnitril oder MSA jeweils gepfropft auf eine Kautschukgrundlage, die eine Glastemperatur unterhalb von 0 °C aufweist.

Zum Stand der Technik nennen wir:
(1) Ullmann's Encyclopädie der techn. Chemie, Bd. 19, 4. Aufl. (1980) S. 272f.
(2) DE-OS 2 246 726
(3) US-PS 3 641 212 und
(4) DE-OS 1 949 487.
Copolymerisate aus Styrol und Acrylnitril sind aus (1) bekannt. Sie lassen sich gut thermoplastisch verarbeiten, sind ziemlich hart und weisen im Vergleich zu reinem Polystyrol eine hervorragende Lösungsmittelbeständigkeit auf. Ihre Zähigkeit lässt jedoch zu wünschen übrig. Es ist bekannt, dass man die Schlagzähigkeit von harten Styrol-Acrylnitril-Copolymerisaten verbessern kann, wenn man sie mit einer weichen kautschukelastischen Komponente abmischt. Solche Weichkomponenten können hergestellt worden sein durch Polymerisation eines Gemisches von Styrol und Acrylnitril in Gegenwart eines Kautschuks, wobei zumindest ein Teil der Monomeren auf den Kautschuk gepfropft ist. Diese Formmassen weisen eine zufriedenstellende Schlagzähigkeit auf, sie haben jedoch den Nachteil, dass sie beim Erwärmen auf Temperaturen von etwa 100 °C und darüber ihre Form verändern und schrumpfen: d. h., sie haben eine geringe Wärmeformbeständigkeit.

Copolymerisate aus Styrol und Maleinsäureanhydrid sind ebenfalls aus (1) bekannt. Sie beginnen erst bei relativ hohen Temperaturen zu erweichen und ihre Form zu verändern. Ihre mechanischen Eigenschaften, wie Steifigkeit und Zähigkeit sind jedoch unbefriedigend. Es ist weiter bekannt, dass einige wenige thermoplastische Kunststoffe miteinander mischbar sind. Die weitaus grösste Zahl der Kunststoffe erweisen sich jedoch als unverträglich, wenn man versucht, aus zwei oder mehreren Komponenten Mischungen herzustellen: Unverträglichkeit ist die Regel und Mischbarkeit ist die Ausnahme vgl. z. B. L. Bohn, Kolloid-Zeitschrift 213, (1966), Seite 55 oder G.E. Molau, Journal of Polymer Science, Teil B, 3, (1965) Seite 1007 oder B.J. Schmitt, Angew. Chem. 91, (1979) 296. Verträglichkeit ist in der Regel aber Voraussetzung dafür, dass Kunststoffmischungen brauchbare Eigenschaften haben: Wenn die Komponenten einer Kunststoffmischung unverträglich sind, stellen die Phasengrenzen Keimstellen für einen Bruch dar.

Schlagzähe und zugleich hochwärmeformbeständige thermoplastische Formmassen auf Basis von Styrol-Maleinsäureanhydrid-Copolymerisaten sind verschiedentlich beschrieben worden.

Das Verträglichkeitsproblem von Matrixmaterial und Pfropfhülle des Kautschuks wird z. B. in (2) durch eine kontinuierliche Polymerisation von Styrol und Maleinsäureanhydrid in Gegenwart von Polybutadien erreicht. Aufgrund der hohen Zähigkeit der Polymermasse, auch bei niedrigen Umsätzen, lassen sich in der Praxis jedoch nur relativ kautschukarme Produkte herstellen, die nur unbefriedigende Eigenschaften aufweisen. Bestimmte Kautschuke, wie Polyacrylsäureester, können als Pfropfgrundlage nur mit Schwierigkeiten eingesetzt werden.

In (3) wird die Abmischung von ungepfropftem Nitrilkautschuk mit S-MSA-Co- und Terpolymeren beschrieben. Die resultierenden Produkte besitzen jedoch aufgrund ungenügender Verankerung des Kautschuks in den Matrixpolymeren unbefriedigende mechanische Eigenschaften. In (4) schliesslich werden Mischungen aus Styrol-Maleinsäureanhydrid-Copolymeren und Pfropfkautschuken auf Basis von Polybutadien, Butadien-Acrylsäureester-Mischpolymeren und Polyacrylsäureestern und gegebenenfalls SAN-Copolymeren beschrieben, deren mechanische Eigenschaften jedoch gegenüber herkömmlichen ABS-Polymerisaten deutlich abfallen.

Die mechanischen Eigenschaften der bekannten Formmassen genügen häufig nicht höheren Ansprüchen. Insbesondere ist die Kombination aus Zähigkeit und Steifigkeit nicht ausgewogen. Auch das Verarbeitungsverhalten ist unbefriedigend. Häufig stellt man Laminationserscheinungen fest, die sich beim Spritzguss, z. B. Schieferbrüchen im Angussbereich zeigen. Es bestand daher die Aufgabe, die vorstehend beschriebenen Nachteile zu beheben, ohne die Wärmeformbeständigkeit und das Fliessverhalten abzusenken.

Die Lösung dieser Aufgabe gelingt durch die in Patentanspruch 1 genannten Massnahmen.

Die Erfindung betrifft somit eine thermoplastische Formmasse, enthaltend, vorzugsweise bestehend aus,
A) 5 bis 95 Gew.-%, vorzugsweise 20 bis 80 Gew.-%, jeweils bezogen auf A + B, mindestens eines Styrol-Acrylnitril-Copolymeren, aufgebaut aus
   $a_1$) 99 bis 50 Gew.-%, bezogen auf A, von Styrol und/oder einem kernalkylsubstituierten Styrolderivat und
   $a_2$) 1 bis 50 Gew.-% Acrylnitril
B) 95 bis 5 Gew.-%, vorzugsweise 80 bis 20 Gew.-%, jeweils bezogen auf A + B, mindestens eines Styrol-Maleinsäureanhydridcopolymeren, bestehend aus
   $b_1$) 99 bis 50 Gew.-% Styrol und/oder einem kernalkylsubstituierten Styrolderivat und
   $b_2$) 1 bis 50 Gew.-% Maleinsäureanhydrid und
C) 1 bis 50 Gew.-Teilen, bezogen auf 100 Gew.-Teile A + B, mindestens eines Pfropfmischpolymerisates, aufgebaut aus
   $c_1$) 50 bis 90 Gew.-%, bezogen auf C, mindestens eines Kautschuks mit einer Glastemperatur unterhalb 0 °C,

$c_2$) 1 bis 49 Gew.-%, bezogen auf C, Styrol, α-Methylstyrol und/oder einem kernalkylierten Styrol mit bis zu 12 C-Atomen, und

$c_3$) 49 und 1 Gew.%, bezogen auf C, Acrylnitril und/oder Maleinsäureanhydrid, gegebenenfalls enthaltend

D) 0,1 bis 10 Gew.-Teile, bezogen auf A+B+C, üblicher Zusatzstoffe.

Diese Formmasse ist dadurch gekennzeichnet, dass das Verhältnis der Gewichtsanteile der Comonomeren $a_2$) zu $b_2$) in den Copolymerisaten A) und B)

$$1.38 \geq \frac{a_2}{b_2} \geq 0.72$$

ferner der Gewichtsanteil des Comonomeren $c_3$) der Komponente c) entweder $a_2$) $\geq c_3$) $\geq b_2$) oder $a_2$) $\leq c_3$) $\leq b_2$) ist.

Nachstehend werden die Komponenten der erfindungsgemässen Formmasse, deren Herstellung und die Herstellung der Formmasse beschrieben.

Copolymerisat A

Für die erfindungsgemässen Formmassen werden kautschukfreie Styrol-Acrylnitril-Copolymerisate angewendet; diese bestehen aus Copolymerisaten, die 1 bis 50 Gew.-% Acrylnitril, $a_2$), und 50 bis 99 Gew.-% Styrol oder ein kernalkylsubstituiertes Styrol oder deren Mischungen enthalten. Der Styrolbestandteil kann, um die Wärmeformbeständigkeit zu verbessern, ganz oder teilweise durch kernalkyliertes Styrol, insbesondere p-Methylstyrol, ersetzt sein. Styrol-Acrylnitril-Copolymerisate sind im Handel erhältlich und können z.B. nach der Lehre der DE-AS 1 001 001 bzw. DE-PS 1 003 436 hergestellt werden. Der Molekulargewichtsbereich der Copolymerisate kann $M_w = 8 \cdot 10^4$ bis $M_w = 5 \cdot 10^5$ (Gewichtsmittel $M_w$ aus Lichtstreuung) betragen.

Das Copolymerisat A ist in der erfindungsgemässen Formmasse in einem Anteil von 5 bis 95 Gew.-%, vorzugsweise von 20 bis 80 Gew.-%, jeweils bezogen auf die Summe der Einzelkomponenten A und B, enthalten.

Copolymerisat B

Das Copolymerisat B wird durch kontinuierliche Mischpolymerisation der Monomeren $b_1$) und $b_2$) bei hohen Temperaturen unter starkem Rühren hergestellt. Die Monomeren $b_1$) und $b_2$) werden dazu kontinuierlich in ein Polymerisationsgefäss eingebracht und gleichzeitig wird eine diesen Mengen entsprechende Menge des Polymerisationsgemisches aus dem Gefäss abgezogen (vgl. A.W. Hanson, R.L. Zimmermann, Industrial Eng. Chemistry 49, (1957) Seite 803). Das Monomere $b_1$), das im wesentlichen Styrol ist, aber auch ein kernalkyliertes Styrol, wie p-Methylstyrol, sein kann, ist in Mengen von 50 bis 99 Gew.-%, vorzugsweise von 55 bis 95 Gew.-%, das Monomere $b_2$), Maleinsäureanhydrid, in Mengen von 1 bis 50 Gew.-%, vorzugsweise von 5 bis 45 Gew.-%, im Copolymerisat B enthalten.

Das Copolymerisat B ist in den erfindungsgemässen thermoplastischen Formmassen in einem Anteil von 5 bis 95 Gew.-%, vorzugsweise 20 bis 80 Gew.-%, bezogen auf die Summe der Einzelkomponenten A und B, enthalten.

Ein wesentlicher Punkt für den Aufbau der erfindungsgemässen Formmasse ist, dass das Gewichtsverhältnis von Acrylnitril zu Maleinsäureanhydrid in einem bestimmten Bereich liegt. Dieses Gewichtsverhältnis der Monomeren $a_2/b_2$ muss im Bereich von kleiner gleich 1,38 bis grösser gleich 0,72 liegen. Bei Verhältnissen über- und unterhalb des genannten Bereiches werden jeweils die Werte für die Mechanik der Mischungen schlechter und zugleich wird die Verarbeitbarkeit ungünstiger.

Komponente C

Die Komponente C ist ein Pfropfmischpolymerisat, das in einem Anteil von 1 bis 50 Gew.-Teilen, insbesondere von 10 bis 40 Gew.-Teilen, jeweils bezogen auf 100 Gew.-Teile der Komponente A und B, angewendet wird. Dieses Pfropfmischpolymerisat ist aufgebaut aus 1 bis 49 Gew.-%, vorzugsweise 15 bis 45 Gew.-% eines Gemisches aus mindestens einem vinylaromatischen Monomeren $c_2$), das bis zu 12 Kohlenstoffatome enthält, und 1 bis 49 Gew.-%, vorzugsweise 5 bis 40 Gew.-% Maleinsäureanhydrid und/oder Acrylnitril $c_3$) als Pfropfhülle, auf 50 bis 90 Gew.-%, insbesondere 60 bis 80 Gew.-% einer elastomeren Pfropfgrundlage (Kautschukkomponente) $c_1$).

Die Herstellung des Pfropfmischpolymerisates C ist an sich bekannt. Es kann z.B. hergestellt werden durch Polymerisation eines Gemisches von Styrol und Acrylnitril oder (Meth)acrylaten in Gegenwart eines Kautschuks.

Der Kautschuk $c_1$) soll eine Glastemperatur [nach K.H. Illers und H. Breuer, Kolloid-Zeitschrift 176, (1961), Seite 110] haben, die unter 0 °C, vorzugsweise unter −30 °C liegt. Als Kautschuk kommen z.B. in Betracht: Polybutadien (vgl. DE-OS 1 420 775 und DE-OS 1 495 089) Copolymerisate aus Butadien und Styrol (vgl. GB-PS 649 166), Polyacrylsäureester (vgl. DE-AS 1 260 135), sowie Copolymerisate aus Acrylsäureester und Butadien (vgl. DE-AS 1 238 207), ferner Elastomere von Copolymerisaten aus Acrylsäureestern mit Styrol, Acrylnitril und Vinylethern und Copolymerisate aus Ethylen, Propylen und einem nicht konjugierten Dien (EPDM-Kautschuke).

Die vinylaromatischen Pfropfmonomeren $c_2$) sind Styrol, α-Methylstyrol und/oder kernalkylierte Styrole mit bis zu 12 C-Atomen. Die Pfropfcopolymerisation kann dabei bekannterweise in Lösung, Suspension oder vorzugsweise in Emulsion erfolgen. Die Weichphase des Pfropfmischpolymerisates weist, bei der bevorzugten Herstellung des Kautschuks und der Pfropfung in Emulsion einen mittleren Teilchendurchmesser ($d_{50}$-Wert der integralen Masseverteilung) von 0,08 µm auf. In der Regel liegt der $d_{50}$-Wert im Bereich von 0,1 bis 0,6 µm. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft.

Der Teil der Monomeren, der nicht auf den Kautschuk gepfropft ist, copolymerisiert für sich. Dieses Copolymerisat kann bei den hier in Rede stehenden Gemischen der Komponente B zugerechnet werden. Man kann den Anteil der gepfropften Monomeren dadurch ermitteln, dass man den Gelgehalt der Pfropfcopolymeren bestimmt:

Das Pfropfcopolymerisat wird in einem Lösungsmittel, z.B. in Methylethylketon gelöst; dabei lösen sich nur die nichtgepfropften, für sich allein copolymerisierten Monomeren. Der Bestandteil C ist für die Schlagzähigkeit der erfindungsgemässen Formmasse verantwortlich.

Als weiterer wesentlicher Punkt für den Aufbau der erfindungsgemässen Formmasse ist zu beachten, dass die Gewichtsanteile der Monomerensorte $c_3$ der Komponente C nicht beliebig wählbar ist, sondern in Abhängigkeit von den Monomeren $a_2$ und $b_2$ der die Hartmatrix aufbauenden Komponente A und B gewählt werden muss, so dass gilt

entweder ist $a_2) \geqslant c_3) \geqslant b_2)$
oder es ist $a_2) \leqslant c_3) \leqslant b_2)$

Wenn der Gew.-Anteil des Comonomeren $c_3$

$$c_3) \geqslant a_2) \geqslant b_2)$$
$$c_3) \leqslant a_2) \leqslant b_2)$$

so lassen sich die resultierenden Formmassen nicht schadensfrei verarbeiten, wie Vergleichsversuche zeigen werden (Tab. 2), und auch die Zähigkeit ist unbefriedigend.

### Komponente D

Zusätzlich zu den Komponenten A und B kann die erfindungsgemässe Formmasse übliche Zusatzstoffe in Mengen von 0,1 bis 10 Teilen, bezogen auf 100 Teile von A+B+C, enthalten. Als solche Zusatzstoffe seien genannt: Pigmente, Farbstoffe, Füllstoffe, Flammschutzmittel, weitere verträgliche Polymere, Antistatika, Antioxidantien und Schmiermittel.

Die erfindungsgemässen Formmassen werden nach den üblichen, für die Verarbeitung von Thermoplasten bekannten Verfahren zu Fertigteilen verarbeitet. Sie finden insbesondere Verwendung für Gehäuse von Elektrogeräten, Haushaltgeräten, Telefonen, für Platten, Rohre, Folien, Kinderspielzeug und im KFZ-Bau.

### Herstellung der erfindungsgemässen Formmasse aus den Komponenten

Die Herstellung der erfindungsgemässen Formmasse kann, wie nachstehend beschrieben, erfolgen:

Die Komponente A, B und C werden als Schmelzen bei Temperaturen zwischen 200 und 280 °C auf Extrudern, Walzen oder Knetern bei Verweilzeiten von einigen Minuten gemischt. Man kann aber auch Lösungen der Komponenten A, B und C oder Teilmischungen, z.B. A+B, herstellen und diese mit C+D vermengen, die Lösungsmittel anschliessend entgasen und die Mischungen dann gegebenenfalls mit den Zusatzstoffen abmischen und nochmals konfektionieren. Das Vermischen der Komponente A, B und C kann auch gleichzeitig mit den Zusatzstoffen erfolgen.

Die in den Beispielen und Vergleichsversuchen genannten Parameter wurden wie folgt bestimmt:

1. Die Kerbschlagzähigkeit in $(KJ/m^2)$ wurde nach DIN 53 453 an spritzgegossenen Normkleinstäben bei einer Massetemperatur von 260 °C gemessen.

2. Der Elastizitätsmodul in $(N/mm^2)$ wurde gemäss DIN 53 457 bestimmt.

3. Die Viskositätszahlen (VZ) $\eta$ sp/c in ml/g wurden bei 25 °C in einer 0,5%igen Lösung in Dimethylformamid gemessen.

4. Der Vicat-Erweichungspunkt in °C wurde nach DIN 53 460, Verfahren B, in Silikonöl bestimmt.

5. Das Verarbeitungsverhalten wurde auf einer Spritzgussmaschine vom Typ Stubbe SKM 78 an einem Spritzgussformteil, das eine Kästchenform der Abmessungen $50 \times 130 \times 50$ mm aufwies, überprüft. Die Massetemperatur betrug 250 °C, die Formtemperatur 30 °C. Beurteilt wurde, ob die Formteile nach abgeschlossenem Spritzgiessvorgang Schäden aufweisen oder nicht.

Es zeigt sich überraschenderweise, dass die erfindungsgemässen Polymermischungen eine hohe Wärmeformbeständigkeit, eine hohe Steifigkeit und gleichzeitig gute Zähigkeit aufweisen und sich ohne Fehler verarbeiten lassen.

Für die Herstellung der erfindungsgemässen Formmassen und von Vergleichsformmassen wurden die nachfolgenden Komponenten verwendet:

Komponenten $A_1$–$A_7$
$A_1$: S-AN-Copolymerisat; 10% AN; VZ = 70 (ml/g)
$A_2$: S-AN-Copolymerisat; 15% AN; VZ = 70 (ml/g)
$A_3$: S-AN-Copolymerisat; 20% AN; VZ = 70 (ml/g)
$A_4$: S-AN-Copolymerisat; 25% AN; VZ = 70 (ml/g)
$A_5$: S-AN-Copolymerisat; 30% AN; VZ = 70 (ml/g)
$A_6$: S-AN-Copolymerisat; 35% AN; VZ = 70 (ml/g)
$A_7$: S-AN-Copolymerisat; 40% AN; Vz = 70 (ml/g)

Komponenten $B_1$–$B_5$
$B_1$: S-MSA-Copolymerisat; 8% MSA; VZ = 70 (ml/g)
$B_2$: S-MSA-Copolymerisat; 13% MSA; VZ = 70 (ml/g)
$B_3$: S-MSA-Copolymerisat; 17% MSA; VZ = 70 (ml/g)
$B_4$: S-MSA-Copolymerisat; 24,5% MSA; VZ = 70 (ml/g)
$B_5$: S-MSA-Copolymerisat; 28% MSA; VZ = 70 (ml/g)

Weitere Eigenschaften der Komponenten $A_1$–$A_7$ und $B_1$–$B_5$ sind in der Tabelle 1 aufgeführt.

Komponenten $C_1$–$C_6$

$C_1$: 75% Polybutandienkautschuk, gepfropft mit 25% Styrol/Acrylnitril im Verhältnis (90/10)

$C_2$: 75% Polybutadienkautschuk, gepfropft mit 25% Styrol/Acrylnitril im Verhältnis (83/17)

$C_3$: 75% Polybutadienkautschuk, gepfropft mit 25% Styrol/Acrylnitril im Verhältnis (75/25)

$C_4$: 75% Polybutadienkautschuk, gepfropft mit 25% Styrol/Acrylnitril im Verhältnis (70/30)

$C_5$: 75% eines Kautschuks aus 60 Teilen Acrylsäurebutylester und 40 Teilen Butadien, gepfropft mit 25% Styrol/Acrylnitril im Verhältnis (70/30)

$C_6$: 75% Polybutadienkautschuk, gepfropft mit 25% Styrol/Acrylnitril im Verhältnis (70/30)

Komponente D

$D_1$: Octabromdiphenylether

$D_2$: Ethylenoxid (10 Gew.-%) Propylenoxid (90 Gew.-%)-Copolymeres

Beispiele 1 bis 14 und Vergleichsversuche I bis V

Die erfindungsgemässen Formmassen werden in den nachfolgenden Beispielen näher erläutert, ohne dass damit eine Einschränkung vorgenommen werden soll, wobei die angegebenen Prozente Gewichtsprozente sind, sofern nicht anders vermerkt ist.

Herstellung der Mischungen

Die Komponenten $A_n B_n C_n$ und die Zusatzstoffe $D_n$ der Formmassen der Beispiele und der Vergleichsversuche wurden in den in der Tabelle 2 genannten Mengen in einem Fluidmischer vorgemischt und anschliessend auf einem Kokneter bei etwa 220 bis 230 °C unter Stickstoff innig verknetet. Die Verweilzeit betrug 5 Minuten. Das dabei erhaltene Granulat wurde auf einer Einwellen-Extruder-Schnecke aufgeschmolzen und zu gleichmässigen, für die Spritzgussverarbeitung geeignetem Granulat abgeschlagen. In der Tabelle 2 sind die Eigenschaften der erhaltenen Mischungen aufgeführt.

Tabelle 1

| Produkt | Kerbschlagzähigkeit ($KJ/m^2$) | E-Modul $N/mm^2$ | Vicattemperatur |
|---|---|---|---|
| $A_1$ | 2 | 3400 | 105 |
| $A_2$ | 2 | 3500 | 106 |
| $A_3$ | 3 | 3500 | 106 |
| $A_4$ | 3 | 3600 | 107 |
| $A_5$ | 3 | 3700 | 107 |
| $A_6$ | 3 | 3800 | 107 |
| $A_7$ | 3 | 3800 | 108 |
| $B_1$ | 1 | 3400 | 118 |
| $B_2$ | 1 | 3500 | 119 |
| $B_3$ | 2 | 3600 | 134 |
| $B_4$ | 2 | 3700 | 142 |
| $B_5$ | 3 | 3800 | 146 |

Tabelle 2

| Beispiele Vgl.-Vers. | Zusammensetzung Gew.% | Kerbschlagzähigkeit ($KJ/m^2$) | E-Modul $N/mm^2$ | Vicattemperatur °C | Verarbeitbarkeit | Verhältnis $a_2/b_2$ | $C_3$ |
|---|---|---|---|---|---|---|---|
| 1 | 42 $A_1$ 42 $B_1$ 16 $C_1$ | 6 | 2700 | 109 | keine Schäden | 1,25 | $a^2 = c_3 > b_2$ |
| 2 | 42 $A_1$ 42 $B_2$ 16 $C_1$ | 6 | 2800 | 111 | keine Schäden | 0,77 | $b_2 > c_3 = a_2$ |
| 3 | 42 $A_2$ 42 $B_3$ 16 $C_2$ | 7 | 2800 | 116 | keine Schäden | 0,88 | $a_2 < c_3 = b_2$ |
| 4 | 42 $A_4$ 42 $B_4$ 16 $C_3$ | 9 | 2900 | 125 | keine Schäden | 0,89 | $a_2 = c_3 > b_2$ |
| 5 | 42 $A_4$ 42 $B_5$ 16 $C_3$ | 9 | 2900 | 125 | keine Schäden | 0,89 | $a_2 = c_3 < b_2$ |
| 6 | 42 $A_5$ 42 $B_5$ 16 $C_4$ | 9 | 2900 | 124 | keine Schäden | 1,07 | $a_2 = c_3 > b_2$ |

Tabelle 2 (Fortsetzung)

| Beispiele Vgl.-Vers. | Zusammenset-zung Gew.% | Kerb-schlagzä-higkeit (KJ/m²) | E-Modul N/mm² | Vicattem-peratur °C | Verarbeit-barkeit | Verhältnis $a_2/b_2$ | $C_3$ |
|---|---|---|---|---|---|---|---|
| 7 | 42 $A_6$ 42 $B_5$ 16 $C_4$ | 10 | 2900 | 125 | keine Schäden | 1,25 | $b_2 > c_3 > a_2$ |
| 8 | 21 $A_4$ 63 $B_5$ 16 $C_3$ | 8 | 2900 | 134 | keine Schäden | 0,89 | $a_2 = c_3 < b_2$ |
| 9 | 35 $A_4$ 35 $B_4$ 30 $C_3$ | 16 | 2800 | 117 | keine Schäden | 1,04 | $a_2 = c_3 > b_2$ |
| 10 | 30 $A_6$ 45 $B_5$ 25 $C_4$ | 15 | 2900 | 129 | keine Schäden | 1,25 | $a_2 > c_3 > b_2$ |
| 11 | 42 $A_5$ 42 $B_5$ 16 $C_5$ | 8 | 2900 | 124 | keine Schäden | 0,89 | $a_2 = c_3 > b_2$ |
| 12 | 42 $A_5$ 42 $B_5$ 16 $C_6$ | 9 | 2900 | 124 | keine Schäden | 0,89 | $a_2 = c_3 > b_2$ |
| 13 | 40 $A_4$ 40 $B_4$ 16 $C_3$ 4 $D_1$ | 9 | 2700 | 121 | keine Schäden | 1,04 | $a_2 = c_3 > b_2$ |
| 14 | 40 $A_4$ 40 $B_4$ 15 $C_3$ 5 $D_2$ | 9 | 2800 | 121 | keine Schäden | 1,04 | $a_2 = c_3 > b_2$ |
| nicht erfin-dungsgem. | | | | | | | |
| I | 42 $A_4$ 42 $B_4$ 16 $C_4$ | 3 | 2600 | 115 | Schäden | 1,04 | $a_2 < c_3 > b_2$ |
| II | 42 $A_7$ 42 $B_4$ 16 $C_4$ | 3 | 2200 | 117 | Schäden | 1,63 | $a_2 > c_3 > b_2$ |
| III | 42 $A_6$ 42 $B_4$ 16 $C_4$ | 4 | 2300 | 116 | Schäden | 1,42 | $a_2 > c_3 > b_2$ |
| IV | 42 $A_3$ 42 $B_5$ 16 $C_3$ | 6 | 2400 | 120 | Schäden | 0,71 | $a_2 < c_3 < b_2$ |
| V | 42 $A_2$ 42 $B_5$ 16 $C_3$ | 4 | 2300 | 115 | Schäden | 0,54 | $a_2 < c_3 < b_2$ |

## Patentansprüche

1. Thermoplastische Formmasse, enthaltend
A) 5 bis 95 Gew.-%, bezogen auf A + B, mindestens eines Styrol-Acrylnitril-Copolymeren, aufgebaut aus
$a_1$) 99 bis 50 Gew.-%, bezogen auf A, Styrol und/oder einem kernalkylsubstituierten Styrol-derivat und

$a_2$) 1 bis 50 Gew.-% Acrylnitril,
B) 95 bis 5 Gew.-%, bezogen auf A + B, minde-stens eines Styrol-Maleinsäureanhydridcopo-lymeren, bestehend aus
$b_1$) 99 bis 50 Gew.-% Styrol und/oder einem kernalkylsubstituierten Styrolderivat und
$b_2$) 1 bis 50 Gew.-% Maleinsäureanhydrid und
C) 1 bis 50 Gew.-Teilen bezogen auf 100 Gew.-Teile A + B, mindestens eines Pfropfmischpolymerisates, aufgebaut aus, jeweils bezogen auf C,

$c_1$) 50 bis 90 Gew.-% mindestens eines Kautschuks mit einer Glastemperatur unterhalb von 0 °C,

$c_2$) 1 bis 49 Gew.-% Styrol, $\alpha$-Methylstyrol und/oder einem kernalkylierten Styrol mit bis zu 12 C-Atomen, und

$c_3$) 49 bis 1 Gew.-% Acrylnitril und/oder Maleinsäureanhydrid dadurch gekennzeichnet, dass das Verhältnis der Gewichtsanteile der Copolymeren $a_2$) zu $b_2$) in den Copolymerisaten A) und B)

$$1.38 \geq \frac{a_2}{b_2} \geq 0.72$$

beträgt und ferner der Gewichtsanteil des Copolymeren $c_3$) der Komponente C) entweder $a_2$) $\geq c_3$) $\geq b_2$) oder $a_2$) $\leq c_3$) $\leq b_2$) ist.

2. Thermoplastische Formmasse, bestehend aus

A) 5 bis 95 Gew.-%, bezogen auf A + B, mindestens eines Styrol-Acrylnitril-Copolymeren, das einpolymerisiert enthält, jeweils bezogen auf A,

$a_1$) 99 bis 50 Gew.-% Styrol und/oder ein kernalkylsubstituiertes Styrolderivat und

$a_2$) 1 bis 50 Gew.-% Acrylnitril,

B) 95 bis 5 Gew.-%, bezogen auf A + B, mindestens eines Styrol-Maleinsäureanhydridcopolymeren, bestehend aus

$b_1$) 99 bis 50 Gew.-% Styrol und/oder einem kernalkylsubstituierten Styrolderivat und

$b_2$) 1 bis 50 Gew.-% Maleinsäureanhydrid und

C) 1 bis 50 Gew.-Teilen bezogen auf 100 Gew.-Teile A + B, mindestens eines Pfropfmischpolymerisates, aufgebaut aus, jeweils bezogen auf C,

$c_1$) 50 bis 90 Gew.-% mindestens eines Kautschuks mit einer Glastemperatur unterhalb von 0 °C,

$c_2$) 1 bis 49 Gew.-% Styrol, $\alpha$-Methylstyrol und/oder einem kernalkylierten Styrol mit bis zu 12 C-Atomen und

$c_3$) 49 bis 1 Gew.-% Acrylnitril und/oder Maleinsäureanhydrid dadurch gekennzeichnet, dass das Verhältnis der Gewichtsteile der Comonomeren $a_2$) zu $b_2$) in den Copolymerisaten A) und B)

$$1.38 \geq \frac{a_2}{b_2} \geq 0.72$$

beträgt und ferner der Gewichtsanteil des Comonomeren $c_3$) der Komponente C) entweder $a_2$) $\geq c_3$) $\geq b_2$) oder $a_2$) $\leq c_3$) $\leq b_2$) ist.

3. Thermoplastische Formmasse, bestehend aus

A) 20 bis 80 Gew.-%, bezogen auf A + B, mindestens eines Styrol-Acrylnitril-Copolymeren, das einpolymerisiert enthält, jeweils bezogen auf A,

$a_1$) 99 bis 50 Gew.-% Styrol und/oder ein kernalkylsubstituiertes Styrolderivat und

$a_2$) 1 bis 50 Gew.-% Acrylnitril,

B) 80 bis 20 Gew.-%, bezogen auf A + B, mindestens eines Styrol-Maleinsäureanhydridcopolymeren, bestehend aus

$b_1$) 99 bis 50 Gew.-% Styrol und/oder einem kernalkylsubstituierten Styrolderivat und

$b_2$) 1 bis 50 Gew.-% Maleinsäureanhydrid und

C) 10 bis 50 Gew.-Teilen bezogen auf 100 Gew.-Teile A + B, mindestens eines Pfropfmischpolymerisates, aufgebaut aus, jeweils bezogen auf C,

$c_1$) 60 bis 80 Gew.-% mindestens eines Kautschuks auf Basis von Polybutadien oder einem Copolymerisat von Butadien und Alkylacrylat mit 1–8 C-Atomen im Alkylrest mit einer Glastemperatur unterhalb von 0 °C,

$c_2$) 1 bis 49 Gew.-% Styrol, $\alpha$-Methylstyrol und/oder einem kernalkylierten Styrol mit bis zu 12 C-Atomen und

$c_3$) 49 bis 1 Gew.-% Acrylnitril und/oder Maleinsäureanhydrid dadurch gekennzeichnet, dass das Verhältnis der Gewichtsanteile der Comonomeren $a_2$) zu $b_2$) in den Copolymerisaten A) und B)

$$1.38 \geq \frac{a_2}{b_2} \geq 0.72$$

beträgt und ferner der Gewichtsanteil des Comonomeren $c_3$) der Komponente C) entweder $a_2$) $\geq c_3$) $\geq b_2$) oder $a_2$) $\leq c_3$) $\leq b_2$) ist.

4. Thermoplastische Formmasse, bestehend aus

A) 20 bis 80 Gew.-%, bezogen auf A + B, mindestens eines Styrol-Acrylnitril-Copolymeren, das einpolymerisiert enthält, jeweils bezogen auf A,

$a_1$) 99 bis 50 Gew.-% Styrol und/oder ein kernalkylsubstituiertes Styrolderivat und

$a_2$) 1 bis 50 Gew.-% Acrylnitril,

B) 80 bis 20 Gew.-%, bezogen auf A + B, mindestens eines Styrol-Maleinsäureanhydridcopolymeren, bestehend aus

$b_1$) 99 bis 50 Gew.-% Styrol und/oder einem kernalkylsubstituierten Styrolderivat und

$b_2$) 1 bis 50 Gew.-% Maleinsäureanhydrid und

C) 10 bis 40 Gew.-Teilen bezogen auf 100 Gew.-Teile A + B, mindestens eines Pfropfmischpolymerisates, aufgebaut aus, jeweils bezogen auf C,

$c_1$) 60 bis 80 Gew.-% mindestens eines Kautschuks aus Polybutadien oder einem Copolymerisat aus Butadien und Alkylacrylat mit 1–8 C-Atomen im Alkylrest mit einer Glastemperatur unterhalb von 0 °C,

$c_2$) 17,5 bis 22,5 Gew.-% Styrol und

$c_3$) 2,5 bis 7,5 Gew.-% Acrylnitril und/oder Maleinsäureanhydrid dadurch gekennzeichnet, dass das Verhältnis der Gewichtsanteile der Comonomeren $a_2$) zu $b_2$) in den Copolymerisaten A) und B)

$$1.25 \geq \frac{a_2}{b_2} \geq 0.77$$

beträgt und ferner der Gewichtsanteil des Comonomeren $c_3$) der Komponente C) entweder $a_2$) $\geq$ $c_3$) $\geq$ $b_2$) oder $a_2$) $\leq$ $c_3$) $\leq$ $b_2$) ist.

5. Formmasse nach Anspruch 1, dadurch gekennzeichnet, dass die Formmasse als Komponente D 0,1 bis 10 Gew.-Teile, bezogen auf 100 Gew.-Teile A+B+C, übliche Zusatzstoffe aufweist.

6. Verfahren zur Herstellung von Formmassen gemäss Anspruch 5 durch Vereinigen der Schmelzen der Komponente A, B, C und D.

7. Verwendung der Formmassen gemäss Anspruch 1 zur Herstellung von Formteilen.

8. Formteile aus Formmassen gemäss Anspruch 1.

**Claims**

1. A thermoplastic molding material containing
A) from 5 to 95% by weight, based on A+B, of one or more styrene/acrylnitrile copolymers built up from
$a_1$) from 99 to 50% by weight, based on A, of styrene and/or a styrene derivative which is substituted by alkyl in the nucleus, and
$a_2$) from 1 to 50% by weight of acrylonitrile,
B) from 95 to 5% by weight, based on A+B, of one or more styrene/maleic anhydride copolymers consisting of
$b_1$) from 99 to 50% by weight of styrene and/or a styrene derivative which is substituted by alkyl in the nucleus and
$b_2$) from 1 to 50% by weight of maleic anhydride and
C) from 1 to 50 parts by weight, per 100 parts by weight of A+B, of one or more graft copolymers built up from
$c_1$) from 50 to 90% by weight of one or more rubbers having a glass transition temperature below 0°C, $c_2$) from 1 to 49% by weight of styrene, α-methylstyrene and/or a styrene substituted by alkyl in the nucleus and having up to 12 carbon atoms and
$c_3$) from 49 to 1% by weight of acrylonitrile and/or maleic anhydride,
the percentages in each case being based on C, wherein the weight ratio of the comonomers $a_2$) to $b_2$) in the copolymers A) and B) is

$$1.38 \geq \frac{a_2}{b_2} \geq 0.72$$

and furthermore the weight of the comonomer $c_3$) of component C) is such that either $a_2$) $\geq$ $c_3$) $\geq$ $b_2$) or $a_2$ $\leq$ $c_3$) $\leq$ $b_2$).

2. A thermoplastic molding material consisting of
A) from 5 to 95% by weight, based on A+B, of one or more styrene/acrylonitrile copolymers containing as a copolymer, in each case based on A,
$a_1$) from 99 to 50% by weight of styrene and/or a styrene derivative which is substituted by alkyl in the nucleus and
$a_2$) from 1 to 50% by weight of acrylonitrile,
B) from 95 to 5% by weight, based on A+B, of one or more styrene/maleic anhydride copolymers consisting of
$b_1$) from 99 to 50% by weight of styrene and/or a styrene derivative which is substituted by alkyl in the nucleus and
$b_2$) from 1 to 50% by weight of maleic anhydride and
C) from 1 to 50 parts by weight per 100 parts by weight of A+B, of one or more graft copolymers built up from
$c_1$) from 50 to 90% by weight of one or more rubbers having a glass transition temperature below 0°C,
$c_2$) from 1 to 49% by weight of styrene, α-methylstyrene and/or a styrene substituted by alkyl in the nucleus and having up to 12 carbon atoms and
$c_3$) from 49 to 1% by weight of acrylonitrile and/or maleic anhydride
the percentages in each case being based on C, wherein the weight ratio of the comonomers $a_2$) to $b_2$) in the copolymers A) and B) is

$$1.38 \geq \frac{a_2}{b_2} \geq 0.72$$

and furthermore the weight of the comonomer $c_3$) of component C) is such that either $a_2$) $\geq$ $c_3$) $\geq$ $b_2$ or $a_2$) $\leq$ $c_3$) $\leq$ $b_2$).

3. A thermoplastic molding material consisting of
A) from 20 to 80% by weight, based on A+B, of one or more styrene/acrylonitrile copolymers containing as a copolymer, in each case based on A,
$a_1$) from 99 to 50% by weight of styrene and/or a styrene derivative which is substituted by alkyl in the nucleus and
$a_2$) from 1 to 50% by weight of acrylonitrile,
B) from 80 to 20% by weight, based on A+B, of one or more styrene/maleic anhydride copolymers consisting of
$b_1$) from 99 to 50% by weight of styrene and/or a styrene derivative which is substituted by alkyl in the nucleus and
$b_2$) from 1 to 50% by weight of maleic anhydride and
C) from 10 to 50 parts by weight per 100 parts by weight of A+B, of one or more graft copolymers built up from

$c_1$) from 60 to 80% by weight of one or more rubbers based on polybutadiene or a copolymer of butadiene and alkyl acrylate where alkyl is of 1 to 8 carbon atoms having a glass transition temperature below 0 °C,

$c_2$) from 1 to 49% by weight of styrene, α-methylstyrene and/or a styrene substituted by alkyl in the nucleus and having up to 12 carbon atoms

$c_3$) from 49 to 1% by weight of acrylonitrile and/or maleic anhydride,

the percentages in each case being based on C, wherein the weight ratio of the comonomers $a_2$) to $b_2$) in the copolymers A) and B) is

$$1.38 \geq \frac{a_2}{b_2} \geq 0.72$$

and furthermore the weight of the comonomer $c_3$) of component C) is such that either $a_2) \geq c_3) \geq b_2$) or $a_2) \leq c_3) \leq b_2$).

4. A thermoplastic molding material consisting of

A) from 20 to 80% by weight, based on A+B, of one or more styrene/acrylonitrile copolymers containing as a copolymer, in each case based on A,

$a_1$) from 99 to 50% by weight, based on A, of styrene and/or a styrene derivative which is substituted by alkyl in the nucleus and

$a_2$) from 1 to 50% by weight of acrylonitrile,

B) from 80 to 20% by weight, based on A+B, of one or more styrene/maleic anhydride copolymers consisting of

$b_1$) from 99 to 50% by weight of styrene and/or a styrene derivative which is substituted by alkyl in the nucleus and

$b_2$) from 1 to 50% by weight of maleic anhydride and

C) from 10 to 40 parts by weight, per 100 parts by weight of A+B, of one or more graft copolymers built up from

$c_1$) from 60 to 80% by weight of one or more rubbers consisting of polybutadiene or a copolymer of butadiene and an alkyl acrylate where alkyl is of 1 to 8 carbon atoms, having a glass transition temperature below 0 °C,

$c_2$) from 17.5 to 22.5% by weight of styrene and

$c_3$) from 2.5 to 7.5% by weight of acrylonitrile and/or maleic anhydride,

the percentages in each case being based on C, wherein the weight ratio of the comonomers $a_2$) to $b_2$) in the copolymers A) and B) is

$$1.25 \geq \frac{a_2}{b_2} \geq 0.77$$

and furthermore the weight of the comonomer $c_3$) of component C) is such that either $a_2) \geq c_3) \geq b_2$) or $a_2) \leq c_3) \leq b_2$).

5. A molding material as claimed in claim 1, which contains from 0.1 to 10 parts by weight per 100 parts by weight of A+B+C, of conventional additives as component D.

6. A process for preparing a molding material as claimed in claim 5 by combining the melts of components A, B, C and D.

7. Use of the molding material as claimed in claim 1 to prepare moldings.

8. Moldings from a molding material as claimed in claim 1.

**Revendications**

1. Masses à mouler thermoplastiques, contenant

A) de 5 à 95% en poids, par rapport à A+B, d'au moins un copolymère styrène/acrylonitrile, composé de

$a_1$) 99 à 50% en poids, par rapport à A, de styrène et/ou d'un dérivé de styrène à substitution alkyle sur le noyau, et

$a_2$) 1 à 50% en poids d'acrylonitrile,

B) de 95 à 5% en poids, par rapport à A+B, d'au moins un copolymère styrène/anhydride maléique, constitué de

$b_1$) 99 à 50% en poids de styrène et/ou d'un dérivé de styrène à substitution alkyle sur le noyau, et

$b_2$ 1 à 50% en poids d'anhydride maléique et

C) de 1 à 50 parties en poids, pour 100 parties en poids de A+B, d'au moins un copolymère greffé, se composant de, à chaque fois par rapport à C,

$c_1$) 50 à 90% en poids d'au moins un caoutchouc ayant une température de transition vitreuse inférieure à 0 °C,

$c_2$) 1 à 49% en poids de styrène, d'α-méthylstyrène et/ou d'un styrène alkylé sur le noyau avec jusqu'à 12 atomes de carbone, et

$c_3$) 49 à 1% en poids d'acrylonitrile et/ou d'anhydride maléique,

caractérisées en ce que le rapport des fractions pondérales des comonomères $a_2$) à $b_2$) dans les copolymères A) et B) s'élève à

$$1.38 \geq \frac{a_2}{b_2} \geq 0.72$$

et en outre la fraction pondérale du comonomère $c_3$) du composant C est soit $a_2) \geq c_3) \geq b_2$) ou $a_2) \leq c_3) \leq b_2$).

2. Masses à mouler thermoplastiques, se composant de

A) 5 à 95% en poids, par rapport à A+B, d'au moins un copolymère styrène/acrylonitrile, qui contient en liaison polymère, à chaque fois par rapport à A,

$a_1$) 99 à 50% en poids de styrène et/ou d'un dérivé de styrène à substitution alkyle sur le noyau, et

$a_2$) 1 à 50% en poids d'acrylonitrile,

B) 95 à 5% en poids, par rapport à A+B, d'au moins un copolymère styrène/anhydride maléique, se composant de

b₁) 99 à 50% en poids de styrène et/ou d'un dérivé de styrène à substitution alkyle sur le noyau, et

b₂) 1 à 50% en poids d'anhydride maléique, et

C) 1 à 50 parties en poids, pour 100 parties en poids de A+B, d'au moins un copolymère greffé, qui se compose, à chaque fois par rapport à C,

c₁) de 50 à 90% en poids d'au moins un caoutchouc ayant une température de transition vitreuse inférieure à 0°C,

c₂) de 1 à 49% en poids de styrène, d'α-méthylstyrène et/ou d'un styrène alkylé sur le noyau avec jusqu'à 12 atomes de carbone, et

c₃) de 49 à 1% en poids d'acrylonitrile et/ou d'anhydride maléique,

caractérisées en ce que le rapport des fractions pondérales des comonomères a₂) à b₂) dans les copolymères A) et B) s'élève à

$$1.38 \geq \frac{a_2}{b_2} \geq 0.72$$

et en outre la fraction pondérale du comonomère c₃) du composant C est soit a₂) ≥ c₃) ≥ b₂) ou a₂) ⩽ c₃) ⩽ b₂).

3. Masses à mouler thermoplastiques, se composant de

A) 20 à 80% en poids, par rapport à A+B, d'au moins un copolymère styrène/acrylonitrile, qui contient en liaison polymère, à chaque fois par rapport à A,

a₁) 99 à 50% en poids de styrène et/ou d'un dérivé de styrène à substitution alkyle sur le noyau et

a₂) de 1 à 50% en poids d'acrylonitrile,

B) 80 à 20% en poids, par rapport à A+B, d'au moins un copolymère styrène/anhydride maléique, se composant de

b₁) 99 à 50% en poids de styrène et/ou d'un dérivé de styrène à substitution alkyle sur le noyau, et

b₂) 1 à 50% en poids d'anhydride maléique, et

C) 10 à 50 parties en poids, pour 100 parties en poids de A+B, d'au moins un copolymère greffé, qui est constitué, à chaque fois par rapport à C,

c₁) de 60 à 80% en poids d'au moins un caoutchouc à base de polybutadiène ou d'un copolymère de butadiène et d'acrylate d'alkyle ayant de 1 à 8 atomes de carbone dans le reste alkyle et ayant une température de transition vitreuse inférieure à 0°C,

c₂) de 1 à 49% en poids de styrène, d'α-méthylstyrène et/ou d'un styrène alkylé sur le noyau avec jusqu'à 12 atomes de carbone, et

c₃) de 49 à 1% en poids d'acrylonitrile et/ou d'anhydride maléique,

caractérisées en ce que le rapport des parties pondérales des comonomères a₂) à b₂) dans les copolymères A) et B) s'élève à et en outre la fraction pondérale du comonomère c₃) du composant C) est soit a₂) ≥ c₃) ≥ b₂) ou a₂ ⩽ c₃) ⩽ b₂).

4. Masses à mouler thermoplastiques, se composant de

A) 20 à 80% en poids, par rapport à A+B, d'au moins un copolymère styrène/acrylonitrile, qui contient en liaison polymère, à chaque fois par rapport à A,

a₁) de 99 à 50% en poids de styrène et/ou d'un dérivé de styrène alkylé sur le noyau, et

a₂) de 1 à 50% en poids d'acrylonitrile,

B) 80 à 20% en poids, par rapport à A+B, d'au moins un copolymère styrène/anhydride maléique, qui se compose de

b₁) 99 à 50% en poids de styrène et/ou d'un dérivé de styrène à substitution alkyle sur le noyau, et

b₂) 1 à 50% en poids d'anhydride maléique et

C) 10 à 40 parties en poids, pour 100 parties en poids de A+B, d'au moins un copolymère greffé, qui est constitué, à chaque fois par rapport à C,

c₁) de 60 à 80% en poids d'au moins un caoutchouc de polybutadiène ou d'un copolymère de butadiène et d'acrylate d'alkyle avec de 1 à 8 atomes de carbone dans le reste alkyle et ayant une température de transition vitreuse inférieure à 0°C,

c₂) de 17,5 à 22,5% en poids de styrène et c₃) de 2,5 à 7,5% en poids d'acrylonitrile et/ou d'anhydride maléique,

caractérisées en ce que le rapport des fractions pondérales des comonomères a₂) à b₂) dans les copolymères A) et B) s'élève à

$$1.25 \geq \frac{a_2}{b_2} \geq 0,77$$

et en outre la fraction pondérale du comonomère c₃) du composant C est soit a₂) ≥ c₃) ≥ b₂) ou a₂) ⩽ c₃) ⩽ b₂).

5. Masses à mouler selon la revendication 1, caractérisées en ce que la masse à mouler contient comme composant D de 0,1 à 10 parties en poids, pour 100 parties en poids de A+B+C, d'additifs classiques.

6. Procédé de préparation des masses à mouler selon la revendication 5, par combinaison de masses fondues des composants A, B, C et D.

7. Utilisation de masses à mouler selon la revendication 1 pour la préparation de produits moulés.

8. Produits moulés obtenus à partir des masses à mouler selon la revendication 1.

$$1.38 \geq \frac{a_2}{b_2} \geq 0.72$$